# EUROPEAN PATENT APPLICATION

(11) **EP 1 522 914 A1**
(43) Date of publication of application: **13.04.2005**
(21) Application number: 03764147.9
(22) Date of filing: 09.07.2003
(51) Int. Cl.: G06F 1/00

(54) **CLIENT TERMINAL, SOFTWARE CONTROL METHOD, AND CONTROL PROGRAM**

(30) Priority: 15.07.2002 JP 2002205715
(71) Applicant: Sony Corporation, Tokyo 141-0001 (JP)
(72) Inventor: AIDA, Taku, c/o SONY CORPORATION, Tokyo 141-0001 (JP); IIDA, Akinori, c/o SONY CORPORATION, Tokyo 141-0001 (JP); ENDO, Yoshinobu, c/o SONY CORPORATION, Tokyo 141-0001 (JP); NAKAJIMA, Tomihiko, c/o SONY MARKETING (JAPAN) INC, Tokyo 108-007 (JP); KOSUGE, Kaoru, c/o SONY MARKETING (JAPAN) INC, Tokyo 108-0074 (JP); SAKAGUCHI, H., c/o SONY MARKETING (JAPAN) INC, Tokyo 108-0074 (JP); MURAKAMI, Yutaka, c/o SONY MARKETING (JAPAN) INC, Tokyo 108-0074 (JP)
(74) Representative: Nicholls, Michael John
(86) International application number: PCT/JP2003/008717
(87) International publication number: WO 2004/008299

(57) **Abstract**

In order to prevent sale software sold by a software sale server to a user and downloaded to a computer of the user from being copied and used illegally, the software sale server is informed of apparatus information unique to the computer and a user ID assigned to the user when the computer is sold to the user. When the user purchases sale software from the software sale server, the software sale server saves the name and version of the sale software, associating the name and the version with the user ID and the apparatus information. When the user activates the sale software for the first time, the computer transmits the user ID, the apparatus information, the software name and the software version to the software sale server to be collated with their respective counterparts, which were saved before. If a result of collation indicates that the pieces of information match their counterparts, a license key for activating the sale software is transmitted to the computer.

## Description

### Technical Field

The present invention relates to a software download sale system and an information-processing system. More particularly, the present invention relates to efforts to avoid operations, which are carried out to illegally copy software, by using apparatus information of a computer activating the software.

### Background Art

Due to sudden popularization of the Internet in recent years, software is sold through the Internet. A software vendor sells software desired by a user, and issues a license approving the use of the software to the user.

The license is implemented by transmitting a license key of software desired by a user to the user. The user downloads the license key, which will allow the user to use the software, along with the software from a software sale server.

By embedding a license key for sold software, the software becomes usable. Without the license key, the software is not usable. By embedding a license key for sold software, a user other than the user for whom the license key is issued is prohibited from illegally copying and using the software.

However, a license for software is issued without authenticating the apparatus specially designated for the software. An example of such an apparatus is a personal computer for executing the software. Thus, the user owning the software, that is, the user purchasing the software, can reveal information on the license to a third party so that the third party other than the user owning the software is capable of using the software with a high degree of freedom.

That is to say, since no apparatus is authenticated in a process to utilize software, a license key for the software allows any apparatus to execute the software. As a result, a user other than the authorized user is capable of illegally copying and using the software.

It is thus an object of the present invention to provide an information-processing apparatus capable of limiting the use of software to an authorized user only.

### Disclosure of Invention

In order to achieve the object described above, the present invention presents a software-providing system, which comprises a software-providing server for providing software to client terminals and the client terminals for utilizing software received from the software-providing server.

The client terminal comprises read means and control means. The read means is means for reading out terminal identification information for identifying the client terminal, in which the software has been installed, when the installed software is activated. The control means is means for controlling the activation of the software on the basis of the terminal identification information read out by the read means.

In this case, storage means can be further provided as means for storing the terminal identification information read out by the read means at first activation of the software as the so-called authentication-use identification information for authenticating the client terminal.

In addition, comparison means can be further provided as means for comparing the terminal identification information, which is read out by the read means when the software is activated for the second or any subsequent time, with the authentication-use identification information stored in the storage means.

Furthermore, the control means is capable of activating the software if the comparison means indicates that the terminal identification information read out by the read means matches the authentication-use identification information.

Moreover, the software can be presented to the user by way of a network.

In addition, the terminal identification information for identifying the client terminal can be a serial number assigned to a CPU employed in the client terminal.

Furthermore, the control means can be a control program different from the software.

Moreover, in order to achieve the object described above, the present invention reads out the terminal identification information for identifying the client terminal, in which the software has been installed and controls the activation of the software on the basis of the terminal identification information when the installed software is activated.

In this case, the terminal identification information read out at first activation of the software can be stored in storage means as authentication-use identification information for authenticating the client terminal.

In addition, the terminal identification information, which is read out when the software is activated for the second or any subsequent time, can be compared with the authentication-use identification information stored in the storage means.

Furthermore, the software can be activated if the terminal identification information read out at activation of the software matches the authentication-use identification information.

Moreover, the software can be presented to the user by way of a network.

In addition, the terminal identification information for identifying the client terminal can be a serial number assigned to a CPU employed in the client terminal.

Furthermore, a controller for controlling the software can be a control program different from the software.

In order to achieve the object described above, the present invention presents a control program to be executed by a computer as a program, which comprises a read function and a control function. The read function is a function for reading out terminal identification information for identifying the client terminal, in which the software has been installed, when the installed software is activated. The control function is a function for controlling the activation of the software on the basis of the terminal identification information read out by the read function.

In this case, a storage function can be further implemented by the computer as a function for storing the terminal identification information read out by the read function at first activation of the software in storage means as authentication-use identification information for authenticating the client terminal.

In addition, the computer can further implement a comparison function for comparing the terminal identification information, which is read out by the read function when the software is activated for the second or any subsequent time, with the authentication-use identification information stored in the storage means.

Furthermore, the control function is capable of activating the software if the comparison function indicates that the terminal identification information read out by the read function matches the authentication-use identification information.

In addition, the terminal identification information for identifying the client terminal can be a serial number assigned to a CPU employed in the client terminal.

### Brief Description of Drawings

Fig. 1 is a diagram showing the configuration of a network of a software sale system implemented by an embodiment;
Fig. 2 is a diagram showing a model of the configuration of a file transmitted to a client terminal as a file to be installed in the client terminal;
Fig. 3A is a diagram showing the logical configuration of an apparatus information database and Fig. 3B is a diagram showing the logical configuration of a software information database;
Fig. 4 is a diagram showing a model of information, programs and other data, which are stored in the client terminal;
Fig. 5A and 5B are conceptual diagrams referred to in an explanation of a function to prevent an activation of an illegal copy of sale software;
Fig. 6 is a diagram showing a typical hardware configuration of the client terminal;
Fig. 7 is a diagram showing a typical hardware configuration of a software sale server;
Fig. 8 shows a flowchart referred to in an explanation of a procedure executed by the software sale system to issue a license to a user; and
Fig. 9 shows a flowchart referred to in an explanation of an authentication procedure for second and subsequent activations of sale software.

### Best Mode for Carrying Out the Invention

A preferred embodiment of the present invention is explained in detail as follows.

### (1) Outline of the Embodiment

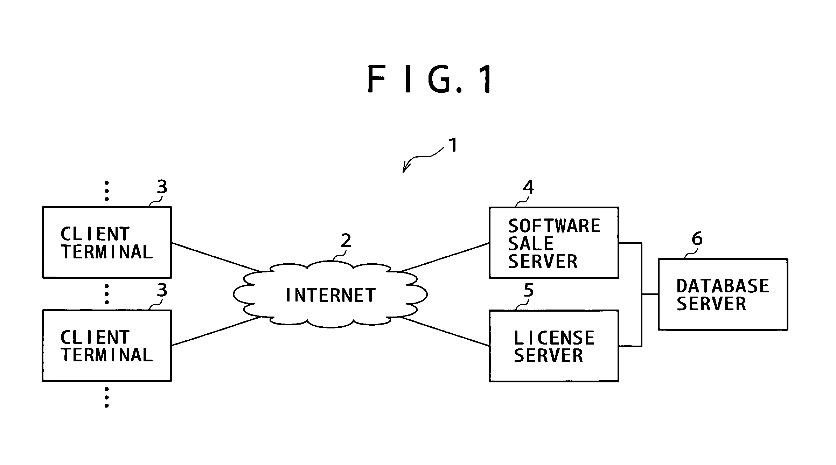

As shown in Fig. 1, when software is sold and downloaded to a client terminal 3 connected to a software sale server 4 by typically the Internet, the software sale server 4 records various kinds of data in the software sale server 4. The data includes apparatus information unique to the client terminal 3, a user ID and information on the sold software. The information on the sold software includes a name assigned to a file and a software version.

Then, the user installs the software purchased and downloaded from the software sale server 4 in the client terminal 3. When the user makes an attempt to execute the software, the client terminal 3 obtains the apparatus information of the client terminal 3, the user ID and the information on the software. Then, the client terminal 3 transmits the apparatus information of the client terminal 3, the user ID and the information on the software to the software sale server 4 in order to make an inquiry about an approval of an issuance of a license. That is to say, the operations to obtain as well as transmit the apparatus information of the client terminal 3, the user ID and the information on the software are carried out by execution of a control program affiliated in advance to the software when the software is executed for the first time.

Receiving the apparatus information of the client terminal 3, the user ID and the information on the software from the client terminal 3, the software sale server 4 collates (compares) the apparatus information, the user ID and the information on the software with respectively the apparatus information, the user ID and the information on the software, which have been recorded in the software sale server 4. If these pieces of data match each other, a message is transmitted to a license server as a message indicating an approval of a transmission of a license key to the client terminal 3. This message is referred to as information on acquisition and issuance of a license. By transmitting the license key from the license server to the client terminal, a license can be issued to only the client terminal 3, which is an apparatus purchasing the software.

When the client terminal 3 receives the license key from the software sale server 4 by execution of the control program, the client terminal 3 records the apparatus information of the client terminal 3 onto a local disk. In this way, the apparatus information can be recorded as information for identifying the client terminal 3, to which the license key has been transmitted.

Thereafter, every time the client terminal 3 activates the software, the client terminal 3 obtains the apparatus information of the client terminal 3 and collates with the apparatus information recorded on the local disk. When these pieces of apparatus information match each other, the client terminal 3 is allowed to execute the software.

If the software is installed in another computer different from the computer employed in the client terminal 3 purchasing and downloading the software, the apparatus information of the other computer is different of the apparatus information of the client terminal 3. Thus, the software cannot be activated in the other computer.

As described above, only the apparatus purchasing and downloading the software is capable of acquiring a license key for the software and executing the software.

### (2) Details of the Embodiment

Fig. 1 is a diagram showing the configuration of a network of the software sale system 1 implemented by the embodiment.

The software sale system 1 comprises the software sale server 4, the license server 5, a database server 6 and a plurality of aforementioned client terminals 3, 3, 3 □□□.

If it is not necessary to distinguish the client terminals 3, 3, 3 □□□ from each other, they are represented by merely the client terminal 3.

By adopting a predetermined protocol such as a TCP/IP (Transmission Control Protocol/Internet Protocol), the software sale server 4, the license server 5 and the database server 6 are capable of carrying out communications for, among others, the purpose of exchanging files by way of the Internet 2.

The software sale server 4 is a server for selling and downloading various kinds of application software to the client terminal 3 by way of the Internet 2. Referred to hereafter as sale software, the application software includes software used for recording musical data, picture-editing software, a word processor and spreadsheet operation software.

Determination means to be described later determines whether or not the software sale server 4 is allowed to issue a license to the client terminal 3. If the software sale server 4 is allowed to issue a license to the client terminal 3, the software sale server 4 allows the license server 5 to transmit a license key to the client terminal 3. The license key is license information required for activating sale software.

The license server 5 is a server for generating a license key and transmitting the license key to a client terminal 3 that has purchased sale software. In the license server 5, license-information generation means generates the license key.

A necessary condition for operating the sale software sold by the software sale server 4 is a license key transmitted by the license server 5 for the sale software.

Thereafter, when the sale software is activated for the second or any subsequent time, the client terminal 3 obtains apparatus information of the client terminal 3 and collates the acquired apparatus information with apparatus information stored in the local disk. If both the pieces of apparatus information match each other, the sale software is activated. If both the pieces of apparatus information do not match each other, on the other hand, the sale software is not activated.

The sale software is activated only if the apparatus information stored in the local disk at the acquisition of the license key as apparatus information of the client terminal 3 matches the apparatus information obtained at an activation of the sale software as apparatus information of the client terminal 3 described above. Thus, a copy of the sale software can be prevented from being activated in an apparatus other than the client terminal 3 that has acquired the license key.

The database server 6 is a server for storing apparatus information unique to the client terminal 3 and a user ID assigned to a user owning the client terminal 3. The apparatus information is terminal identification information such as information indicating a receiving terminal or information indicating an activating terminal. The user ID is information for identifying the user. In addition, the database server 6 is also used for storing the user ID of a purchaser who has bought the sale software from the software sale server 4 and software-identifying information such as the name and version of the sale software.

As the apparatus information unique to the client terminal 3, information unique to an apparatus employed in the client terminal 3 can be used. An example of the information unique to an apparatus employed in the client terminal 3 is the serial number of a CPU (Central Processing Unit) employed in the client terminal 3. The database server 6 is connected to the software sale server 4 and the license server 5 by using dedicated lines. The database server 6 supplies data to the software sale server 4 or the license server 5 in response to an inquiry made by the software sale server 4 or the license server 5 respectively.

The client terminal 3 is a terminal connectable to the Internet 2. Typically, the client terminal 3 is a personal computer.

By using the client terminal 3, the user purchases and downloads sale software from the software sale server 4. Then, the user utilizes the purchased and downloaded sale software in the client terminal 3.

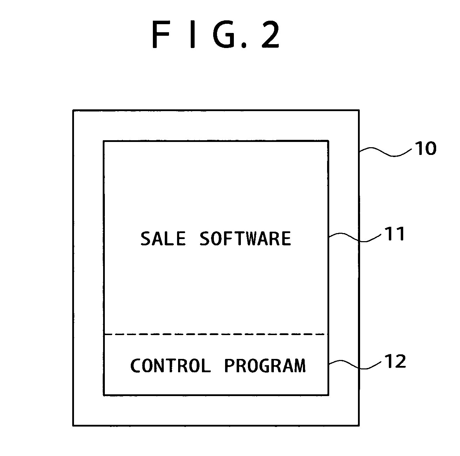

Fig. 2 is a diagram showing a model of the configuration of an installation-use file 10 transmitted to a client terminal 3 as a file containing sale software purchased by the client terminal 3 from the software sale server 4 and downloaded from the software sale server 4 to the client terminal 3.

The installation-use file 10 contains an installation image obtained as a result of carrying out a compression process on the sale software in accordance with a predetermined algorithm. The client terminal 3 is capable of installing the sale software by decompression of the original installation image.

The installation-use file 10 contains sale software 11 purchased by the user and a control program 12 affiliated with the sale software 11 in addition to the sale software 11. It is to be noted that the installation-use file 10 does not include a license key for activating the sale software 11.

The following means are implemented by execution of the control program 12 in the client terminal 3.

### (1) License acquisition means

License acquisition means is means included in the client terminal 3 as means for obtaining terminal information and transmitting the terminal information to the software sale server 4 at the first activation of the sale software 11 after the installation of the sale software 11 in the client terminal 3 by the user. The terminal information includes apparatus information, the user ID as well as the name and version of the sale software 11.

As will be described later, the apparatus information is typically information appended to hardware such as a CPU employed in the client terminal 3. Thus, the apparatus information is read out directly from the hardware. The other pieces of terminal information are read out from the local disk.

It is to be noted that the software sale server 4 receives the pieces of terminal information from the client terminal 3 and collates the information with pieces of corresponding data stored in advance in the database server 6. If a result of collation indicates that data corresponding to the terminal information exists in the database server 6, an issuance of a license is allowed. If a result of collation indicates that data corresponding to the terminal information does not exist in the database server 6, on the other hand, an issuance of a license is not allowed. The result of collation to authenticate the client terminal 3 is transmitted from the software sale server 4 to the license server 5. A successful authentication causes the license server 5 to transmit a license key to the client terminal 3.

The license acquisition means stores the license key received from the license server 5 in a local disk (storage means) by associating the license key with the sale software 11 so that activation means is capable of activating the sale software 11. In addition, apparatus information is read out from the client terminal 3 and also stored in the local disk.

### (2) Activation-authenticating means

When the user activates the sale software 11 for the second or any subsequent time, activation-authenticating means reads out apparatus information directly from the hardware of the client terminal 3 and then collates the apparatus information read out from the hardware of the client terminal 3 with the apparatus information, which was stored on the local disk at the time the license key was acquired as described above.

If a result of collation indicates that both the pieces of apparatus information match each other, the activation-authenticating means activates the sale software 11. If the result of collation indicates that both the pieces of apparatus information do not match each other, on the other hand, the activation-authenticating means does not activate the sale software 11.

Thus, if the sale software 11 downloaded to the client terminal 3 is installed in another computer, the pieces of apparatus information will not match each other so that the sale software 11 cannot be activated in the other computer.

This embodiment has a configuration in which the control program 12 is transmitted from the software sale server 4 to the client terminal 3 along with the sale software 11 as described above. It is to be noted, however, that the configuration of the present invention is not limited to this embodiment. For example, it is possible to implement a configuration in which the control program 12 is stored in advance in the local disk employed in the client terminal 3, which is then sold to the user.

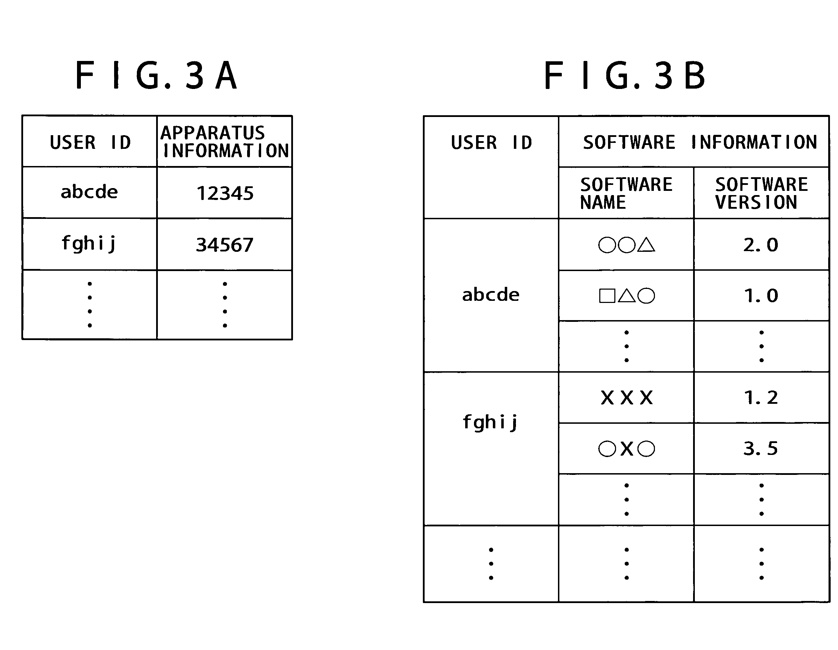

Fig. 3A is a diagram showing the logical configuration of an apparatus information database employed in the database server 6.

The apparatus information database is a database of user IDs and pieces of apparatus information associated with the user IDs.

A store selling a client terminal 3 to a user provides an ID assigned to the user and apparatus information of the purchased client terminal 3 as a user ID and apparatus information, which are to be stored in the apparatus information database.

As an alternative, the user can enter a user ID in a postcard affiliated to the client terminal 3 as a card showing apparatus information identifying the client terminal 3 and mail the postcard to the vendor manufacturing the client terminal 3.

Any information can be used as the apparatus information of the client terminal 3 as long as the information is unique to the client terminal 3. In the case of this embodiment, particularly, the serial number of a CPU employed in a client terminal 3 is used as the apparatus information of the client terminal 3.

A component such as the local disk employed in a computer serving as the client terminal 3 or the like is often replaced with another one.

Thus, if information unique to a component that will most likely be replaced with another one is used as the apparatus information, the client terminal 3 can no longer be authenticated after the component is replaced with another one.

For this reason, the serial number of a CPU employed in the client terminal 3 is used as the apparatus information. This is because the CPU is a component of much importance to the client terminal 3 as well as a component that will hardly be replaced with another one.

In addition to the serial number of a CPU, a product number stored in a BIOS (Basic Input/Output System) can be used as the apparatus information.

When a user purchases a client terminal 3, a user ID is assigned to the user purchasing the client terminal 3.

The user ID is revealed to the user at the purchasing time. Thereafter, the user can use the user ID for example to purchase application software through the Internet 2.

Fig. 3B is a diagram showing the logical configuration of a software information database employed in the database server 6.

The software information database is a database for storing the name and version of each piece of sale software for every user ID. The pieces of sale software were purchased and downloaded so far from the software sale server 4 by a user identified by the user ID associated with the pieces of sale software.

This is because, when the user purchases and downloads sale software from the software sale server 4, the software sale server 4 transmits the name and version of the sale software to the database server 6 to be stored in the database server 6.

By referring to the software information database, it is possible to know which user has purchased what sale software.

Thus, the database server 6 has a configuration having storage means for storing software information for identifying software and receiving-terminal information including a receiving-terminal identification for identifying a receiving terminal.

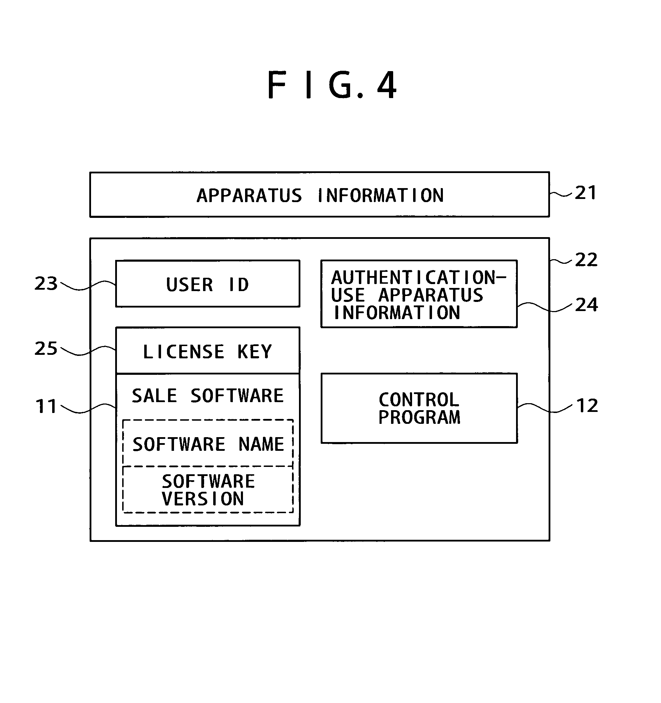

Fig. 4 is a diagram showing a model of information, programs and other data, which are stored in the client terminal 3.

As shown in the figure, the client terminal 3 holds, among others, apparatus information 21, a user ID 23, authentication-use apparatus information 24, a license key 25, sale software 11 and a control program 12. The user ID 23, the authentication-use apparatus information 24, the license key 25, the sale software 11 and the control program 12 are stored in a local disk 22 whereas the apparatus information 21 is embedded in a CPU.

The apparatus information 21 is embedded in the CPU as a value unique to the CPU when the manufacturer of the CPU makes the CPU. That is to say, another CPU having the same apparatus information 21 does not exist.

The user ID 23 has been written in the local disk 22 in advance before the client terminal 3 is sold to a user. The user ID 23 is a value unique to the user.

When the user purchases and downloads the sale software 11 from the software sale server 4, the sale software 11 and the control program 12 are stored in the local disk 22.

When the software sale server 4 allows a license to be issued to the client terminal 3, the control program 12 is executed to invoke the license acquisition means, which then stores a license key 25 transmitted by the license server 5 to the client terminal 3 in the local disk 22. In this way, a license is issued to the client terminal 3 by transmitting a license key thereto.

When the client terminal 3 receives a license key for the sale software 11 from the license server 5, that is, when the sale software 11 is activated for the first time, the license acquisition means reads out the apparatus information 21 from the hardware of the client terminal 3 and stores the apparatus information 21 in the local disk 22 as the authentication-use apparatus information 24.

It is to be noted that, when the user activates the sale software 11 for the second or any subsequent time, the activation-authenticating means compares the apparatus information 21 with the authentication-use apparatus information 24 and, only if the apparatus information 21 matches the authentication-use apparatus information 24, the sale software 11 is activated.

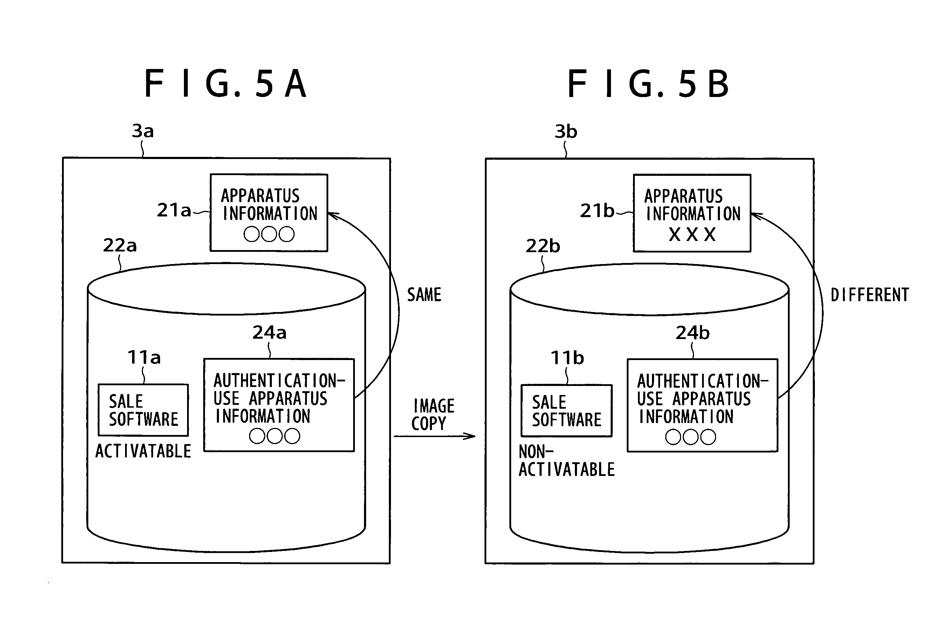

Fig. 5 is a conceptual diagram referred to in an explanation of a function to prevent an illegal copy of the sale software 11 from being activated.

A client terminal 3a is a terminal, the user of which has properly purchased and downloaded sale software 11. On the other hand, a client terminal 3b is a terminal, which has a copy of the sale software 11.

Authentication-use apparatus information 24a stored in the local disk 22a employed in the client terminal 3a is the same as apparatus information 21a of the client terminal 3a.

Thus, after the activation-authenticating means verifies that the authentication-use apparatus information 24a is the same as apparatus information 21a, the activation-authenticating means activates the sale software 11a.

On the other hand, the local disk 22b employed in the client terminal 3b contains an image copy of the local disk 22a. That is to say, data stored in the local disk 22b is completely the same as data stored in the local disk 22a.

However, authentication-use apparatus information 24b stored in the local disk 22b is different from apparatus information 21b of the client terminal 3b.

Thus, when the user makes an attempt to activate the sale software 11b in the client terminal 3b, the activation-authenticating means does not verify that the authentication-use apparatus information 24b is the same as apparatus information 21b and, hence, does not activate the sale software 11.

Therefore, even if the local disk 22a employed in the client terminal 3a is moved to the client terminal 3b as it is, the sale software 11b cannot be activated in the client terminal 3b. This is because the activation-authenticating means collates with the authentication-use apparatus information 24 stored in the local disk 22 with apparatus information 21 unique to the client terminal 3 as described above.

In addition, if the sale software 11 downloaded from the software sale server 4 is copied to another computer, the copied sale software 11 cannot be activated because the authentication-use apparatus information 24 does not exist in the first place in the other computer serving as the copy destination.

Furthermore, the authentication-use apparatus information 24 is also copied to another computer if, for example, the authentication-use apparatus information 24 is stored in the same directory as the sale software 11 and the directory is copied to the other computer. In this case, the copied authentication-use apparatus information 24 will be different from the apparatus information of the other computer serving as the copy destination so that the sale software 11 cannot be activated in the other computer.

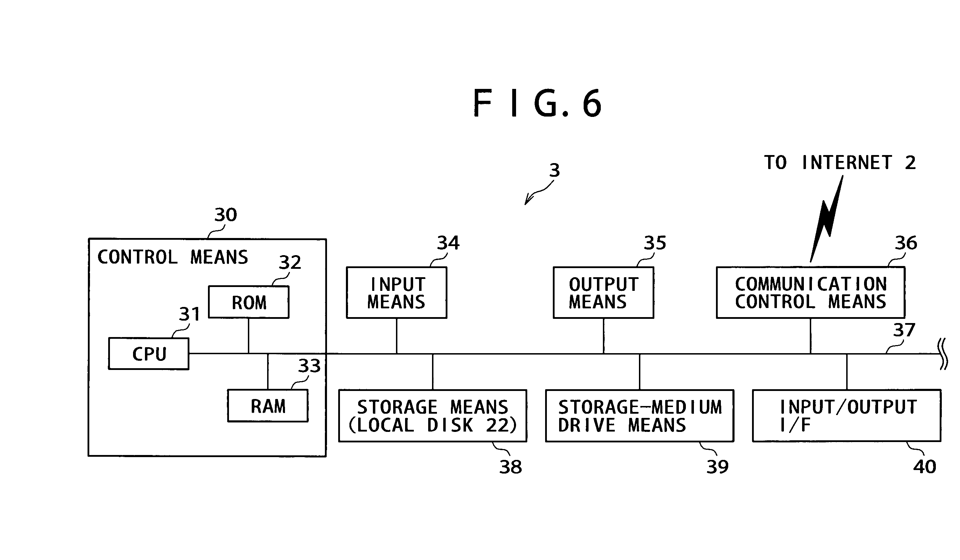

Fig. 6 is a diagram showing a typical hardware configuration of the client terminal 3. The client terminal 3 has the same configuration as a personal computer such as a desk-top personal computer or a portable personal computer.

The client terminal 3 comprises control means 30, input means 34, output means 35, communication control means 36, storage means 38, storage-medium drive means 39 and input/output interface (I/F) 40, which are connected to each other by a bus line 37.

Data signals and control signals are exchanged between the control means 30 and the input means 34, the output means 35, the communication control means 36, the storage means 38, the storage-medium drive means 39 as well as the input/output interface (I/F) 40 by way of the bus line 37.

The control means 30 comprises a CPU 31, a ROM (Read Only Memory) 32 and a RAM (Random Access Memory) 33.

By execution of predetermined programs, the CPU 31 carries out various kinds of processing, processes information and controls the client terminal 3 as a whole.

In this embodiment, the CPU 31 is capable of carrying out processing including a process of purchasing and downloading sale software 11 from the software sale server 4, a process of acquiring a license key for the first activation of the sale software 11, a process of getting authenticated for the second and subsequent activations of the sale software 11 as well as a process of executing the sale software 11.

The ROM 32 is a read-only storage unit for storing, among other information, a variety of programs, data and parameters. The programs are executed by the CPU 31 to carry out various kinds of processing and various kinds of control. The CPU 31 is capable of reading out a program, data and a parameter from the ROM 32 but incapable of rewriting or erasing them.

The RAM 33 is a random-accessible storage unit used as a working memory of the CPU 31. The CPU 31 is capable of writing a program and data into the RAM 33 and erasing a program and data, which are already stored in the RAM 33. In this embodiment, the RAM 33 includes an area allocated to the CPU 31 for activities such as acquisition of a license key and activation of the sale software 11.

The input means 34 is an input unit typically comprising a keyboard and a mouse.

The keyboard is a component operated by the user to enter information such as characters and numbers to the client terminal 3. The keyboard includes keys operated to enter Japanese characters and alphabetical characters, the ten keys operated to enter numbers, a variety of functional keys, a cursor key and other keys.

The user operates the keyboard typically to enter an ID assigned to the user to the client terminal 3 as a user ID to be transmitted to the software sale server 4. If the sale software 11 is a word processor, the user operates the keyboard for example to enter an input text to the screen of the sale software 11.

In addition, it is also possible to provide a configuration in which the sale software 11 can be activated by entering a program name given to the sale software 11 via the keyboard to a predetermined dialog box or in response to a prompt.

The mouse is a pointing device. If the client terminal 3 is operated by using a GUI (Graphical User Interface) or the like, by clicking the mouse to select a button or icon shown on a display unit, predetermined information can be provided.

For example, it is also possible to provide a configuration in which, if the mouse is clicked to select an icon shown on the display unit as an icon representing sale software 11 after the sale software 11 is installed, a command to activate the sale software 11 is entered to the client terminal 3.

The output means 35 has a configuration typically comprising the display unit cited above and a printer.

The monitor is typically a CRT (Cathode Ray Tube) display unit, a liquid crystal display unit, a plasma display unit or another display unit for displaying information on a screen.

The information shown on the monitor includes inputs entered by operating the keyboard or the mouse and a screen presented by the sale software 11 as a user interface.

The printer can be any one of a variety of printers such as an inkjet printer, a laser printer, a thermal transcription printer and a dot printer.

The printer is capable of printing an output such as a text and/or a picture on a printing medium such as a paper.

The communication control means 36 is a unit for connecting the client terminal 3 to a variety of servers such as a web server or a mail server through the Internet 2. Examples of the communication control means 36 are a modem and a terminal adaptor.

In order to carry out a communication through the Internet 2, the TCP/IP (Transmission Control Protocol/Internet Protocol) or another protocol is adopted.

The communication control means 36 establishes as well as sustains communications between the client terminal 3 and the software sale server 4 and between the client terminal 3 and the license server 5, downloads sale software 11, and receives an acquired license key. The communication control means 36 has a configuration including (activating-)terminal information transmission means, license information acceptance means and software reception means.

The storage means 38 has a configuration comprising a readable/writable storage medium and a driving unit for reading out and writing a program as well as data from and into the storage medium. As the storage medium, a hard disk is mainly employed. However, other kinds of readable/writable storage means can also be used in the configuration. Examples of the other readable/writable storage means are a magneto-optical disk, a magnetic disk and a semiconductor memory.

In this embodiment, composed of a hard disk, the storage means 38 is the local disk 22 shown in Fig. 4.

The storage means 38 is means used for storing the user ID 23, the authentication-use apparatus information 24, the license key 25, the sale software 11 and the control program 12, which are cited before. In addition, the storage means 38 is also used for storing, among other pieces of software, Chinese-Japanese characters conversion software, a browser, a communication program and an OS (Operating System). The Chinese-Japanese characters conversion software is software for converting Japanese characters into Chinese characters. The browser is software for displaying a web page transmitted by the software sale server 4 or another server on a display unit. The communication program is a program for controlling the communication control means 36 in order to sustain a communication through the Internet 2. The OS is basic software for managing memory areas and managing file inputs/outputs in operations carried out by the client terminal 3.

The storage-medium drive means 39 is a driving unit for driving a mountable and dismountable storage medium in operations to read out and write data from and into the storage medium. Examples of the mountable and dismountable storage medium are a magneto-optical disk, a magnetic disk, a semiconductor memory, a paper tape containing punched data and a CD-ROM. It is to be noted that the paper tape and the CD-ROM are each a read-only storage medium.

The input/output interface 40 is typically a serial interface or an interface conforming to another standard. By connecting the input/output interface 40 to an external apparatus compatible with the input/output interface 40, the function of the client terminal 3 can be extended. Examples of such an external apparatus are a storage unit such as a hard disk, a speaker and a microphone.

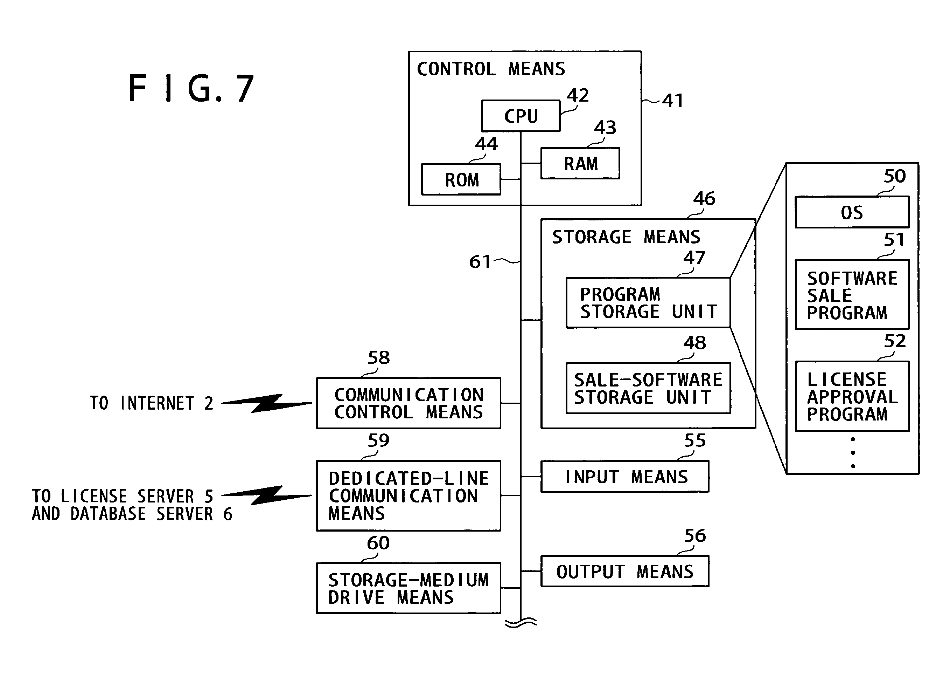

Fig. 7 is a diagram showing a typical hardware configuration of the software sale server 4.

The software sale server 4 comprises control means 41, storage means 46, input means 55, output means 56, communication control means 58, dedicated-line communication means 59 and storage-medium drive means 60, which are connected to each other by a bus line 61.

The control means 41 comprises a CPU 42, a ROM 44 and a RAM 43.

The CPU 42 is a unit for executing predetermined programs to carry out a variety of calculations and various kinds of information processing and for controlling the software sale server 4 as a whole.

To put it more concretely, the CPU 42 carries out operations including operations to sell and download sale software 11 to the client terminal 3 as well as approve issuance of a license to the client terminal 3 purchasing the sale software 11.

The ROM 44 is a read-only storage memory for storing a basic program, data and parameters. The basic program, the data and the parameters are required for operating the software sale server 4.

The RAM 43 is a random-accessible memory used by the CPU 42 as a working area in carrying out operations including operations to sell and download sale software 11 to the client terminal 3 as well as approve issuance of a license to the client terminal 3 purchasing the sale software 11.

The storage means 46 is a storage medium, which data can be read out from and written into. An example of the storage means 46 is a hard disk with a large storage capacity. The storage means 46 comprises a program storage unit 47 and a sale-software storage unit 48.

The program storage unit 47 is used for storing the OS 50, a software sale program 51, a license approval program 52 and other programs.

The software sale program 51 executed by the CPU 42 to carry out a function to sell sale software 11 to the user and download the sold sale software 11 to the client terminal 3 owned by the user.

To put it in detail, the CPU 42 executes the software sale program 51 to carry out functions of the software sale server 4. Examples of the functions of the software sale server 4 are operations to transmit a variety of web pages to the client terminal 3, transmit sale software 11 ordered by the user to the client terminal 3 and transmit a user ID assigned to the user to the database server 6 along with the software name and software version of the purchased sale software 11. The web pages are pages related to the purchase of the sale software 11. An example of the web pages is an order page used by the user as a page for selecting sale software 11 to be purchased and placing an order for the selected sale software 11. Another example of the web pages is an input page for inputting the user ID from the user.

The license approval program 52 is a program executed by the CPU 42 to carry out a function to give an approval of the issuance of a license.

To put it in detail, the CPU 42 executes the license approval program 52 to carry out functions of the software sale server 4. An example of the functions of the software sale server 4 in this case, is an operation to collate a user ID, apparatus information, a software name and a software version, which are received from the client terminal 3, with a user ID, apparatus information, a software name and a software version, which have already been stored in the database server 6 as counterparts of the received ones, to determine whether or not the issuance of a license is to be approved. Another example of the functions of the software sale server 4 is an operation to issue a command to the license server 5 as a command requesting the license server 5 that a license key be generated and that the generated license key be transmitted to the client terminal 3 if the issuance of the license is approved.

The sale-software storage unit 48 is a storage medium for storing various kinds of sale software 11 as pieces of software to be sold and downloaded to the client terminal 3.

There is a variety of examples of the sale software 11. The examples of the sale software 11 include a word processor, spreadsheet operation software, databases, picture-editing software, game software and an editor.

The input means 55 is an input unit typically comprising a keyboard and a mouse.

The output means 56 is an output unit typically comprising a display unit and a printer.

The storage-medium drive means 60 is a driving unit for driving a mountable and dismountable storage medium in operations to read out and write data from and into the storage medium.

Since the functions of the above functional units are basically the same as the functions of their counterparts employed in the client terminal 3, the explanation of the functions is not repeated.

The communication control means 58 is a functional unit for communicating with the client terminal 3, other terminals and servers. Sale software 11 is sold and downloaded to the client terminal 3 by way of the communication control means 58.

The communication control means 58 comprises software transmission means, (receiving/activating)terminal information reception means, license information issuance means and license approval information issuance means. The license information issuance means is means for transmitting an approval of an issuance of a license to the client terminal 3. The license approval information issuance means is means for transmitting license acquisition issuance information to the license server 5.

The dedicated-line communication means 59 is means for carrying out communications with communication partners such as a terminal and a server, which are connected to the dedicated-line communication means 59 by dedicated communication lines.

In this embodiment, the dedicated-line communication means 59 is connected to the license server 5 and the database server 6.

The software sale server 4 is capable of making an access to data stored in the database server 6 by way of the dedicated-line communication means 59 and transmitting a request for generation and transmission of a license key to the license server 5.

In this embodiment, the software sale server 4 is connected to the license server 5 and the database server 6 by dedicated lines. However, the configuration of the present invention is not limited to this embodiment. For example, the software sale server 4 can also be connected to the license server 5 and the database server 6 by other communication media such as the Internet 2 or a LAN.

The hardware configurations of the license server 5 and the database server 6 are basically identical to that of the software sale server 4.

Therefore, it is not necessary to show the hardware configurations of the license server 5 and the database server 6 in a figure.

The license server 5 has license acquisition issuance information reception means for receiving license acquisition issuance information from the software sale server 4 in a communication control unit, license information generation means for generating a license information by using the license acquisition issuance information received from the software sale server 4 and license information terminal transmission means for transmitting the license key to the client terminal 3 from the communication control unit.

A CPU employed in the license server 5 executes a license-key transmission program to carry out these functions.

The functions of the license server 5 can also be included in the software sale server 4. In this case, the software sale server 4 has a configuration provided with license approval information issuance means and license acquisition issuance information reception means as modules, which exchange license acquisition issuance information with each other.

The database server 6 is requested to collate a user ID, apparatus information, a software name and a software version, which are received from the software sale server 4, with their counterparts stored in the database server 6.

The database server 6 then collates the user ID, the apparatus information, the software name and the software version with their counterparts as requested.

A CPU employed in the database server 6 executes a collation program to carry out this function.

The license server 5 can also request the database server 6 to collate a user ID, apparatus information, a software name and a software version with their counterparts. However, this feature is not included in the embodiment.

In this embodiment, the software sale server 4 acquires a user ID, apparatus information, a software name and a software version from the client terminal 3, and authenticates them. It is also possible to provide a configuration in which the license server 5 carries out this function.

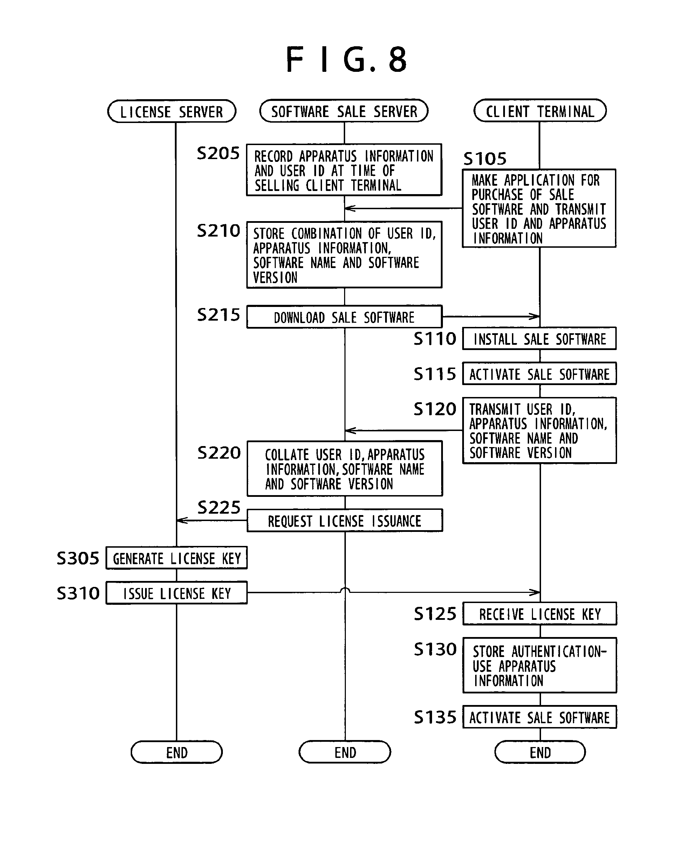

Fig. 8 shows a flowchart referred to in an explanation of a procedure executed by the software sale system 1 to issue a license to a user.

In the following description, the CPUs of the client terminal 3, the software sale server 4 and the license server 5 are assumed to execute predetermined programs to carry out the operations of the client terminal 3, the software sale server 4 and the license server 5 respectively.

First of all, when a user purchases a client terminal 3, a store selling the client terminal 3 transmits the apparatus information of the client terminal 3 and a user ID assigned to the user to the software sale server 4.

Then, at a step 205, the software sale server 4 stores the apparatus information and the user ID in the apparatus information database employed in the database server 6 as a database with a data structure shown in Fig. 3A.

In this way, the user ID is associated with the apparatus information.

It is to be noted that the user ID assigned to the user is also recorded in the local disk 22 employed in the client terminal 3.

After connecting the client terminal 3 to the Internet 2, the user makes an access to a software sale site of the software sale server 4 in order to purchase sale software 11. In response to the access, the software sale server 4 transmits a software sale page to the client terminal 3.

The user is allowed to select sale software 11 that the user wants to purchase from the software sale page.

The user selects the desired sale software 11 from the software sale page, and makes an application for purchase of the desired sale software 11.

Typically, the user clicks a download button set for the desired sale software 11 in order to make the application for purchase of the sale software 11.

As the user makes the application for purchase of the desired sale software 11, the client terminal 3 transmits sale-software identification information for identifying the sale software 11, the user ID 23 and the apparatus information 21 of the client terminal 3 to the software sale server 4 at a step 105.

There are a variety of conceivable methods of transmitting the user ID 23 and the apparatus information 21 to the software sale server 4. For example, a transmission program is provided in advance in the local disk 22 employed in the client terminal 3 as a program, which reads out the user ID 23 from the local disk 22 and the apparatus information 21 of the client terminal 3 from the hardware of the client terminal 3, transmitting the user ID 23 and the apparatus information 21 to the software sale server 4 when the user makes an application for purchase of sale software 11 by using a software sale site of the software sale server 4. As an alternative, the transmission program is downloaded from the software sale server 4 to the client terminal 3 and executed in the client terminal 3 when the sale software 11 is purchased.

In addition, the software sale server 4 is capable of acquiring the user ID 23 and the apparatus information 21 as follows.

First of all, when the user purchases sale software 11, the user enters its own user ID 23 to a predetermined field on the software sale page to transmit the user ID 23 to the software sale server 4. Receiving the user ID 23, the software sale server 4 requests the database server 6 to search the apparatus information database for apparatus information 21 associated with the user ID. The software sale server 4 is thus capable of obtaining the apparatus information 21 of the client terminal 3 in this way.

As an alternative, it is also possible to provide a configuration in which the user obtains the apparatus information 21 in advance and enters the apparatus information 21 to the software sale page along with the user ID 23 to transmit the apparatus information 21 and the user ID 23 to the software sale server 4.

After the software sale server 4 receives these pieces of information, that is, the sale-software identification information, the user ID 23 and the apparatus information 21, from the client terminal 3 at a step 210, the software sale server 4 transmits an installation-use file 10 for installing sale software 11 identified by the sale-software identification information to the client terminal 3 at a step 215.

At that time, the software sale server 4 stores the software name and software version of the sale software 11 transmitted to the client terminal 3 in the software information database employed in the database server 6, associating the software name and the software version with the user ID 23 in a data structure shown in Fig. 3B.

At a step 110, the user installs the sale software 11 downloaded from the software sale server 4 in the client terminal 3. At that time, the control program 12 is also stored in the client terminal 3.

When the user activates the sale software 11 for the first time after the installation at the next step 115, the control program 12 stored earlier is activated to operate the license acquisition means.

The license acquisition means reads out the apparatus information 21 of the client terminal 3 from hardware of the client terminal 3. The apparatus information 21 of the client terminal 3 is shown in Fig. 4. If the serial number of the CPU employed in the client terminal 3 is used as the apparatus information 21, the serial number is read out from the CPU. Then, the license acquisition means reads out the user ID 23 as well as the software name and software version of the sale software 11 from the local disk 22. Subsequently, the license acquisition means transmits the apparatus information 21, the user ID 23, the software name and the software version to the software sale server 4 at a step 120.

Receiving the apparatus information 21, the user ID 23, the software name and the software version from the client terminal 3, the software sale server 4 inquires the database server 6 at a step 220 to confirm the existence of a combination consisting of the apparatus information 21, the user ID 23, the software name and the software version.

At the inquiry made by the software sale server 4, the database server 6 collates the apparatus information 21, the user ID 23, the software name and the software version with data stored in the apparatus information database and the software information database. Then, the database server 6 transmits a result of collation to the software sale server 4.

If the software sale server 4 could successfully confirm the existence of a combination consisting of the apparatus information 21, the user ID 23, the software name and the software version, which were received from the client terminal 3, on the basis of the result of collation, the software sale server 4 requests the license server 5 to issue a license to the client terminal 3 at a step 225.

When the software sale server 4 requests the license server 5 to issue a license to the client terminal 3, the software sale server 4 transmits information to the license server 5. The information transmitted by the software sale server 4 to the license server 5 typically includes a destination to which a license key of the license is to be transmitted and license acquisition issuance information. In this case, the license destination to which a license key is to be transmitted is the client terminal 3. The license acquisition issuance information is license generation information required by the license server 5 to generate the license key.

If the software sale server 4 could not successfully confirm the existence of a combination consisting of the apparatus information 21, the user ID 23, the software name and the software version, which were received from the client terminal 3, on the basis of the result of collation, on the other hand, the software sale server 4 does not request the license server 5 to issue a license to the client terminal 3. Instead, the software sale server 4 transmits a predetermined error message to the client terminal 3.

As described above, the software sale server 4 also serves as an authentication server having a function to determine whether or not an issuance of a license to the client terminal 3 is to be permitted.

Receiving the request for an issuance of a license from the software sale server 4, the license server 5 generates a license key by using the license generation information at a step 305.

Then, at the next step 310, the license server 5 transmits the generated license key to the client terminal 3.

There are a variety of methods of transmitting a license key to the client terminal 3. For example, when the software sale server 4 approves an issuance of a license to the client terminal 3, the software sale server 4 transmits information indicating an approval of an issuance of a license to the client terminal 3 and the license generation information to the license server 5 among other data.

Receiving the approval of an issuance of a license, the client terminal 3 makes an access to the license server 5. In response to the access, the license server 5 generates a license key by using the license generation information and transmits the license key to the client terminal 3.

As an alternative, it is also possible to provide a configuration in which the license server 5 generating a license key interrupts the state of connection between the software sale server 4 and the client terminal 3 in order to transmit the license key to the client terminal 3.

As another alternative, it is also possible to provide a configuration in which the software sale server 4 and the license server 5 form a single server.

At a step 125, the license acquisition means of the client terminal 3 receives the license key from the license server 5 and stores the key in the local disk 22 as the license key 25.

When the client terminal 3 receives a license key, the license acquisition means reads out the apparatus information 21 of the client terminal 3 from hardware of the client terminal 3 and stores the apparatus information 21 in the local disk 22 as the authentication-use apparatus information 24 at the next step 130.

Then, at the next step 135, the client terminal 3 activates the sale software 11, which can be activated due to the reception of the license key 25.

In accordance with the procedure described above, when the sale software 11 is activated for the first time, the client terminal 3 automatically acquires a license key from the license server 5 before being able to activate the sale software 11.

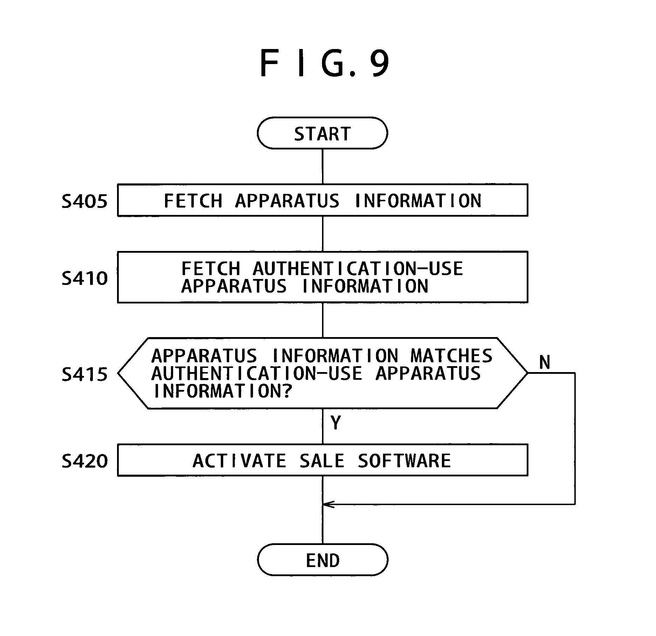

Fig. 9 shows a flowchart referred to in an explanation of an authentication procedure for second and subsequent activation of the sale software 11.

In the client terminal 3, a license has been issued for the sale software 11.

When the user activates the sale software 11 stored in the local disk 22 of the client terminal 3 as shown in Fig. 4, the control program 12 invokes the activation-authenticating means.

Then, the activation-authenticating means reads out the apparatus information 21 from the hardware of the client terminal 3 at a step 405.

Then, at the next step 410, the activation-authenticating means reads out the authentication-use apparatus information 24 from the local disk 22 and collates the authentication-use apparatus information 24 with the apparatus information 21 read out from the hardware to determine whether or not the authentication-use apparatus information 24 matches the apparatus information 21 (step 415).

If the determination result of the step 415 is Y indicating that authentication-use apparatus information 24 matches the apparatus information 21, the client terminal 3 activates the sale software 11.

If the determination result of the step 415 is N indicating that authentication-use apparatus information 24 does not match the apparatus information 21, on the other hand, the client terminal 3 displays a predetermined error message and ends the execution of this authentication procedure without activating the sale software 11.

Since the activation-authenticating means collates the authentication-use apparatus information 24 with the apparatus information 21 every time the sale software 11 is activated as described above, the sale software 11 cannot be activated if a computer activating the sale software 11 is the computer different from the client terminal 3 to which the sale software 11 was downloaded even if the computer contains the entire contents of the local disk 22 employed in the client terminal 3.

The embodiment described above is thus capable of preventing an illegal copy of the purchased and downloaded sale software 11 from being activated.

The operation to purchase and download sale software 11 can be limited to a client terminal 3 that has been registered in the apparatus information database in advance.

In this case, when the sale software 11 is activated for the first time, a license key for the sale software 11 can be obtained automatically.

In addition, the apparatus information 21 can be collated automatically with the authentication-use apparatus information 24 every time the sale software 11 is activated.

So far, an embodiment of the present invention has been explained. However, the present invention is not limited to the embodiment. That is to say, a variety of changes described in the claims can be made to the embodiment.

In the embodiment, the software name and software version of the sale software 11 are used in the authentication described above. However, information for the authentication is not limited to the software name and the software version. Any information can be utilized for the authentication as long as the information is an attribute of the sale software 11. An example of the attribute of the sale software 11 is the manufacturing serial number of the sale software 11.

For example, in recent years, there are many cases in which a person owns a plurality of computers including computers installed at home and the office as well as a mobile computer.

In the configuration described so far, although purchased and downloaded sale software 11 can be used only in the client terminal 3 purchasing and downloading the sale software 11, it is also possible to provide a configuration in which the sale software 11 can be copied to a predetermined number of other computers.

In addition, while the license server 5 and the software sale server 4 are servers different from each other in this embodiment, the present invention is not limited to such a configuration. That is to say, the license server 5 and the software sale server 4 can also be integrated to form a single computer for carrying out functions of both the license server 5 and the software sale server 4. In addition, the database server 6 and the software sale server 4 can also be integrated to form a single computer. As a matter of fact, the database server 6, the license server 5 and the software sale server 4 can also be integrated to form a single server computer.

### Industrial Applicability

In accordance with the present invention, the use of software can be limited to an authorized user only.

## Claims

1. A client terminal comprising:
read means for reading out terminal identification information for identifying said client terminal, in which software has been installed, at an activation time of said installed software; and
control means for controlling activation of said software on the basis of said terminal identification information read out by said read means.

2. A client terminal according to claim 1, said client terminal further having storage means for storing said terminal identification information read out by said read means as authentication-use terminal identification information at a first activation time of said software.

3. A client terminal according to claim 2, said client terminal further having comparison means, which is used for comparing terminal identification information read out by said read means with said authentication-use terminal identification information stored in said storage means, at second and subsequent activation times of said software.

4. A client terminal according to claim 3 wherein said control means activates said software if said comparison means indicates that said terminal identification information read out by said read means matches said authentication-use terminal identification information.

5. A client terminal according to claim 1 wherein said software is presented to said client terminal by way of a network.

6. A client terminal according to claim 1 wherein said terminal identification information for identifying said client terminal is the serial number of a CPU.

7. A client terminal according to claim 1 wherein said control means is a control program different from said software.

8. A software activation control method comprising the steps of:
reading out terminal identification information for identifying a client terminal, in which software has been installed, at an activation time of said installed software; and
controlling activation of said software on the basis of said terminal identification information read out at said previous step.

9. A software activation control method according to claim 8, said software activation control method further having the step of storing said terminal identification information read out at a first activation time of said software in storage means as authentication-use terminal identification information.

10. A software activation control method according to claim 9, said software activation control method further having the step of comparing said terminal identification information read out at second and subsequent activation times of said software with said authentication-use terminal identification information stored in said storage means.

11. A software activation control method according to claim 10 whereby said software is activated if said terminal identification information read out at specific activation time matches said authentication-use terminal identification information stored in said storage means.

12. A software activation control method according to claim 8 wherein said software is presented to said client terminal by way of a network.

13. A software activation control method according to claim 8 wherein said terminal identification information for identifying said client terminal is the serial number of a CPU.

14. A software activation control method according to claim 8 whereby a control program different from said software controls said software.

15. A control program to be executed by a computer, said control program comprising:
a read function to read out terminal identification information for identifying a client terminal, in which software has been installed, at an activation time of said installed software; and
a control function to control activation of said software on the basis of said terminal identification information read out by said read function.

16. A control program according to claim 15, said control program further having a storage function to store said terminal identification information read out by said read function in storage means as authentication-use terminal identification information at a first activation time of said software.

17. A control program according to claim 16, said control program further having a comparison function, which is used as a function to compare terminal identification information read out by said read function with said authentication-use terminal identification information stored in said storage means, at second and subsequent activation times of said software.

18. A control program according to claim 17 wherein said control function activates said software if said comparison function indicates that said terminal identification information read out by said read function matches said authentication-use terminal identification information.

19. A control program according to claim 17 wherein said terminal identification information for identifying said client terminal is the serial number of a CPU.
